(19) Europäisches Patentamt
European Patent Office
Office européen des brevets

(11) **EP 1 742 426 B1**

(12) **EUROPEAN PATENT SPECIFICATION**

(45) Date of publication and mention
of the grant of the patent:
**05.03.2008 Bulletin 2008/10**

(51) Int Cl.:
***H04L 12/56*** *(2006.01)*    ***H04L 12/28*** *(2006.01)*

(21) Application number: **05106240.4**

(22) Date of filing: **08.07.2005**

(54) **Method and apparatus for context based switching between reactive and proactive group header selection**

Verfahren und Vorrichtung zur kontextbasierten Schaltung zwischen reagierender und proaktiver Auswahl eines Gruppenkopfes

Procédé et dispositif pour la commutation dépendant du contexte entre le choix réactif et proactif d'entête de groupe

(84) Designated Contracting States:
**DE GB**

(43) Date of publication of application:
**10.01.2007 Bulletin 2007/02**

(73) Proprietor: **NTT DoCoMo, Inc.**
**Tokyo (JP)**

(72) Inventors:
• **Prehofer, Christian**
**81477, Muenchen (DE)**
• **Wei, Qing**
**81735 Muenchen (DE)**
• **Claussen, Joerg**
**81375, Muenchen (DE)**

(74) Representative: **Betten & Resch**
**Patentanwälte**
**Theatinerstrasse 8**
**80333 München (DE)**

(56) References cited:
**US-A1- 2003 202 465**

• **YONGCAI WANG ET AL: "Energy-driven adaptive clustering data collection protocol in wireless sensor networks" INTELLIGENT MECHATRONICS AND AUTOMATION, 2004. PROCEEDINGS. 2004 INTERNATIONAL CONFERENCE ON CHENGDU, CHINA AUG. 26-31, 2004, PISCATAWAY, NJ, USA,IEEE, 26 August 2004 (2004-08-26), pages 599-604, XP010764711 ISBN: 0-7803-8748-1**
• **HUAMING WU ET AL: "Cluster-based routing overhead in networks with unreliable nodes" WIRELESS COMMUNICATIONS AND NETWORKING CONFERENCE, 2004. WCNC. 2004 IEEE ATLANTA, GA, USA 21-25 MARCH 2004, PISCATAWAY, NJ, USA,IEEE, vol. 4, 21 March 2004 (2004-03-21), pages 2557-2562, XP010708509 ISBN: 0-7803-8344-3**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**FIELD OF INVENTION**

The present invention relates to a method and an apparatus for context based switching between reactive and proactive group header selection.

**BACKGROUND OF THE INVENTION**

In wireless ad hoc networks (also sometimes called mesh networks), some nodes have special roles, such as acting as a group header, a cluster header, a concatenate node, a data processing point or a control node. The selection of such a node can greatly affect the network performance. E.g., in case the group header needs to respond to a gateway inquiry, the node which is most convenient to get the most complete measurements of the whole group can answer the inquiry most accurately and with least energy consumption. The battery, memory and processing power of the data processing unit therefore can speed up the calculation and affect the life time of the whole network which means the appropriate selection of a node which should act as a group header is significantly affecting the operation of the whole network. Similarly, electing a concatenate node and control node in the best or most suitable location can make the data communication and control more efficient. In the following we call a node which is selected to serve a special purpose in the network a "group header". A group header may be any node which sticks out from the group of nodes forming the ad-hoc network in the sense that it serves a specific function which distinguishes it from the other "normal" members of the network which do not operate having such a special function.

As mentioned already, selecting a node which should act as a group header may critically affect the network performance. There are different approaches to select a group header. The existing approaches can be classified into three different categories, the random approach, the proactive approach and reactive approach.

1. In the random approach, the group header is elected arbitrarily.

2. In the proactive approach, context information is considered to select a group header. (e.g.,by changing the priority or probability to become a group header). Such an approach is e.g. described in S. Bandyopadhyay and E. J. Coyle, "An energy efficient hierarchical clustering algorithm for wireless sensor networks", Proceedings of the 22nd Annual Joint Conference of the IEEE Computer and Communications Societies (Infocom 2003), April 2003 In the proactive approach there is checked repeatedly at a fixed timing interval or according to a prescribed timing scheme whether the context information still leads to the group header presently being selected. If this is the case, no new group header is selected but the present one is continued to be used. If the context information changes and requires a new group header selection, such a new group header selection is carried out.

3. In the reactive approach, context information is used to select a group header as well. However, the difference to the proactive approach is that the group header is selected every time a request arrives and is not maintained all the time. This means that there is no prescribed timing scheme for the selection of the group header in case of the reactive approach.

The random approach is the easiest one and needs the least amount of signal exchange for group header selection. However, it does not consider the relevant context information for the selection, and accordingly its effectiveness is limited compared to the other two approaches, because the randomly selected group header already from statistical considerations is not very likely to be the most appropriate one under certain given circumstances.

The proactive approach as well as the reactive approach is more preferable because they take into account context information. The proactive approach repeatedly evaluates the group header selection all the time at fixed intervals. There is repeatedly (e.g. in fixed intervals or according to a prescribed timing scheme) determined whether based on some group header selection criteria the actual group header is still the right one for a given situation. For this kind of evaluation such criteria like whether the group header still has connection to the group, whether it has sufficient battery status, whether it has a sufficiently good radio connection to its group members are evaluated, and if these criteria indicate that a different group header should be selected, the group header selection approach to select a new group header and to switch to a new group header is carried out. This results in periodical signal exchange within the network. However, since the group header is selected proactively, it is fast to respond to any request using the existing already selected group header.

On the other hand, the reactive approach only selects the group header at the time of a request. "Request" here does not only mean a "request to select a group header" but may also e.g. mean a service request such as a request from a gateway to the network to collect new sensor data which then in turn triggers or is interpreted as a group header selection request, the thus selected group header then collecting the sensor data and forwarding it to the gateway. The "request" therefore may be any service request triggering a new group header selection. The request typically is an "external" request which means that the authority or entity which decides about the group header selection is triggered by an external source, and not like in case of the proactive approach follows a given timing scheme which is defined internally in the network or even in the deciding authority itself. The request typically does not -like it does in the proactive approach - follow a prescribed timing scheme but the timing is defined by the requests coming from an external source (external to the deciding authority) like e.g. a gateway.

This "reactive approach" for group header selection can reduce the amount of signalling for group header maintenance in case of low (service) request rates. However, whenever a request is coming, it needs to select a group header before responding to the service request. This increases the response latency. In the following table the advantages and disadvantages of the different approaches for group header selection are listed.

Table 1: Comparison of the different group header selection algorithms

|  | Random Approach | Proactive Approach | Reactive Approach |
| --- | --- | --- | --- |
| Complexity | Low | High | High |
| Response time | Middle | Fast | Slow |
| Amount of control signaling | Low | High | Middle |
| Appropricity of selection | Low | Middle | High |

As can be seen from the table, the different approaches have different characteristics, and each of the different approaches has its disadvantages.

Several attemps have been made to improve the various approaches, as can be seen from different studies which have been carried out to improve the existing aproaches. E.g., in Stability-based Multi-hop Clustering Protocol, J. Tenhunen, V. Typpoe, M. Jurvansuu, Submitted to PIMRC, there is disclosed to proactively select the group header based on link reliability and local power. In Hood: a neighborhood abstraction for sensor networks, Kamin Whitehouse and Cory Sharp and Eric Brewer and David Culler, Proceedings of the 2nd international conference on Mobile systems, applications, and services, 2004, there is disclosed to use a reactive approach to select the group header based on the completeness of cached data from the neighbors and freshness of the cached data. In Distributed Clustering for Ad-Hoc Networks, 1999 International Symposium on Parallel Architectures, Algorithms and Networks (ISPAN '99), June 23 - 25, 1999, Fremantle, Australia. there is proposed a proactive weight based cluster header selection algorithm DMAC. In ASCENT: Adaptive Self-Configuring Sensor Networks Topologies, A. Cerpa, D. Estrin. INFOCOM 2002. Twenty-First Annual Joint Conference of the IEEE Computer and Communications Societies. Proceedings. Volume: 3, 23-27 June 2002, there is disclosed to use the adaptation concept to adjust network topology. While all these works suggest improvements of the existing approaches, nevertheless the basic disadvantages of the individual approaches under certain circumstances remain.

It is therefore an object of the invention to overcome the intrinsic disadvantages of the individual approaches.

US 2003/0202465 discloses a method for selecting a group header wherein a group header or cluster leader repeatedly transmits a cluster leader annopuncement message together with some metrics information. based thereupon the receiving nodes may decide whether they may contend to become a cluster leader based on that metric.

Moreover under special curcumstances like network initiation a node may contend to become a cluster leader.

## SUMMARY OF THE INVENTION

The present invention is defined in the independent claims. The dependent claims define embodiments of the invention.

According to one aspect of the invention there is provided a method for selecting a group header in a wireless network, whereas said method comprises:

a proactive selection approach for selecting the group header, whereas in the proactive group header selection approach it is repeatedly evaluated based on a predetermined timing scheme and one or more group header selection criteria whether to carry out a new group header selection or whether to continue to use the currently used group header;

a reactive approach for selecting the group header, whereas in the reactive approach group header selection is performed in response to a request triggering said group header selection; wherein said method further comprises:

switching between said proactive selection approach and said reactive selection approach based on one or more context parameters which are evaluated to assess whether the proactive approach or the reactive approach is more appropriate at a given condition being represented by said context parameters.

This takes into account that none of the existing algorithms, neither the proactive nor the reactive one, is suitable for all the situations, especial for dynamically changeable situations. In such dynamic environments it may happen that at one moment it is beneficial to use the proactive approach, and at the other moment the reactive approach can be better. Therefore, it is beneficial to switch between different approaches according to different situations and application requirements. The situations and conditions, such as e.g. application requirements may be represented by one or more context parameters which then are evaluated and based on the evaluation it is decided whether to switch or not between the proactive and the reactive group header selection approaches.

According to one embodiment said context parameters comprise one or more of the following:

a parameter indicating the frequency of a request which requests said group header to act;
a parameter indicating the radio link quality of the network;
a parameter indicating mobility or quasi-mobility of the network.

The frequency of a request which requests said group header to act may e.g. be a gateway request frequency. Alternatively it may be any request which requests the group header to act in its specific role, and which triggers it to act in a certain manner from the outside to act as a group header. E. g. in case of the frequency of the gateway request being used as parameter, in case of low gateway request rates a reactive approach may be chosen, and in case of high gateway request rates the proactive approach may be chosen. Instead of the gateway request rate any other request rate requesting the group header to perform some action may be used as context parameter.

The radio link quality of the (overall) network may also be used as a parameter affecting the group header selection approach. If the radio link quality (of the overall network) is good, this indicates an undisturbed environment, while a bad radio quality is an indication of a disturbed environment.

Furthermore (one or more) parameters indicating the mobility of quasi-mobility of the (overall) network may be taken into account. This may include the rate with which nodes are switched on or switched off, entering or leaving the network, or getting or loosing connection. A high mobility or quasi-mobility is indicating a more dynamic network, while a lower mobility or quasi-mobility is indicative of a more static network.

According to one embodiment, if said context parameters indicate a disturbed or dynamic environment a reactive group header selection approach is chosen, and if said context parameters indicate a non-disturbed or static environment said proactive group header selection approach is chosen. This is an approach taking into account the different requirements in more static and more dynamic environments. In more dynamic environments the environment may change, and in order to react to such a change a reactive group header selection approach is more appropriate. On the other hand, in a more static environment or an undisturbed environment there is not much change, and therefore the need to react is less significant making the proactive approach the more preferable one.

These aforementioned parameters may significantly affect the efficiency of the operation of the network, and therefore it can be advantageous to take them into account when making a decision whether to use the proactive or the reactive group header selection approach.

According to one embodiment the method comprises: choosing said group header selection approach such that the number of group management messages necessary to operate the wireless network is minimised. The number of group management messages necessary to operate the wireless network, in other words the "signalling overhead" which is needed to operate and maintain the network and/or its function without effectively contributing to the communication of "payload" (e.g. in case of a network consisting of sensors the measured sensor data may be regarded as "payload") is a parameter which is also significantly affecting network operations. A large overhead means less computing capacity, and a higher energy consumption leading to smaller battery lifetimes. It is therefore advantageous to use the "signalling overhead" as a decision parameter based on which it is decided whether to use the proactive or the reactive group header selection approach.

According to one embodiment the method comprises: performing said switching in continuing to use the group header used before the switching until the switching can be performed in a seamless manner. In case of switching from the reactive approach to the proactive approach this can be achieved by completing the switching only after a group header selection has been performed by the proactive approach. As long as such a new group header has not been determined, in case of a request the old group header which was used during the reactive approach can still be used. For that purpose there may be provided a cache which keeps the most recently used group header.

In case of the switching from the proactive to the reactive selection algorithm the seamless switching can be performed by using the group header of the proactive approach until the switching actually has been completed. E.g. if during the switching process a request comes in, the old group header still is used which was used before the switching until the switching has been completed.

According to one embodiment the method comprises:

calculating a switching indication parameter based on said context parameters, and

comparing said switching indication parameter with a certain threshold to determine whether a switch from one group header selection approach to the other group header selection approach should be performed, whereas different thresholds are applied when determining whether to switch from a first group selection header approach to a second group header selection approach

and whether to switch from a second group header selection approach to a first group header selection approach.

This embodiment provides for some kind of hysteresis in the switching operations. E. g. a higher threshold is applied for a switching from approach 1 to approach 2, while a lower threshold for the switching indication parameter is applied for the switching from approach 2 to approach 1. This increases the stability of the network and avoids too frequent switching in case of unstable network conditions in which the switching indication parameter oscillates around the threshold but with only low amplitudes.

According to one embodiment the method comprises: applying a timeout such that said switching is only performed if the switch indication parameter is beyond said threshold for a certain period of time. Similarly to a hysteresis criterion this also increases the stability of the network and avoids too frequent switching and a signalling and processing overhead caused by too frequent switching. Moreover, this avoids that at the time of the switching actually having been executed the condition which triggered the switching has already changed again and is not fulfilled anymore.

According to one embodiment the method further comprises:

determining based on one or more context parameters one or more of the following:

a threshold which is applied to determine whether to switch between said two group header selection approaches;

selecting the method for switching between said two group header selection approaches among a plurality of switching methods;

selecting the parameters of the switching method used for switching between said two group header selection approaches.

This means that context information may not only be used for the switching decision itself (by comparing the context parameters with a threshold) but also for determining the threshold. Moreover, context information may not only be used for switching decision but also for the method of switching which can make the switching more flexible. This means that e.g. the context information is not only used for calculating the switching threshold but also for selecting the switching method. E.g. the question of whether a hysteresis switching is to be performed or not, whether a time out is to be applied or not, this also may be decided based on context information. Moreover, one or more parameters of the switching method may be decided based on context parameters. E. g. the area of the hysteresis to be used in a hysteresis switching, or the length of a time out may be decided based on context parameters.

According to one embodiment there is provided a default group header selection approach, whereas said default approach is used

if an integrity check after said switching indicates a failure, or

if two groups merge into a single group, or

if said network starts to operate from the beginning.

In case one or more of the network nodes fail to receive the switch command, this will be found by an integrity check, and then the whole network will switch to the default algorithm. Additonally or alternatively, in case two groups with a different group header selection algorithm merge, the default algorithm will be used in the new big group.

According to one embodiment there is further provided a method for determining a threshold to switch between a proactive group header selection approach and a reactive group header selection approach for selecting a group header using, said method comprising:

based on one or more affecting parameters which may affect said decision, calculating the signalling overhead in case of said proactive selection approach and in case of said reactive selection approach depending on said parameters, and

determining a threshold value for said one or more parameters at which a switching between said proactive and said reactive selection approach should be performed if said signalling overhead should be minimised.

According to one embodiment said calculation is performed in a design phase of the network to obtain a priori knowledge about when to switch between the two different approaches.

The calculation of a threshold for one or more affecting parameters enables to set up the network based on some a priori knowledge. The calculation may be carried out using some kind of simulation which is based on assumptions on the network.

According to one embodiment said threshold calculation is also repeatedly updated during runtime of said network based on one or more dynamically changing parameters of said network. This takes into account that during runtime there may be obtained additional or different information than before the network is operating. The parameters may be measured during operation of the network, and based thereupon the threshold may be recalculated.

According to one embodiment the current group header is used for making a switch decision. No additional process or signaling is needed to select a decision point. This enables a robust and efficient switch decision. The group header selection process ensures that in case of the failure of decision point, a new one will take its place. At the same time, because the group header is somehow optimized in the sense of data dissemination, the decision point will be automatically optimized for collecting the related context data for carrying out the switching decision.

## BRIEF DESCRIPTION OF THE DRAWINGS

Fig. 1A and 1B illustrate an environment where an embodiment according to the present invention may be used.

Fig. 2 illustrates the signaling overhead depending on the gateway request rate.

Fig. 3 illustrates the signaling overhead depending on the radio quality.

Fig. 4 illustrates the signaling overhead for the reactive approach (left) and the proactive approach (right) depending on the parameters request rate and radio quality.

Fig. 5 illustrates a switching condition according to an embodiment of the invention.

Fig. 6 illustrates a switching condition according to a further embodiment of the invention.

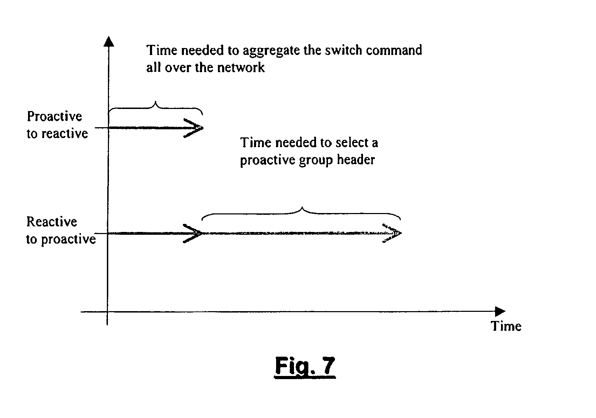

Fig. 7 illustrates a switching time needed for the proactive and the reactive approach.

## DETAILED DESCRIPTION

The present invention will now be described in more detail by means of exemplary embodiments.

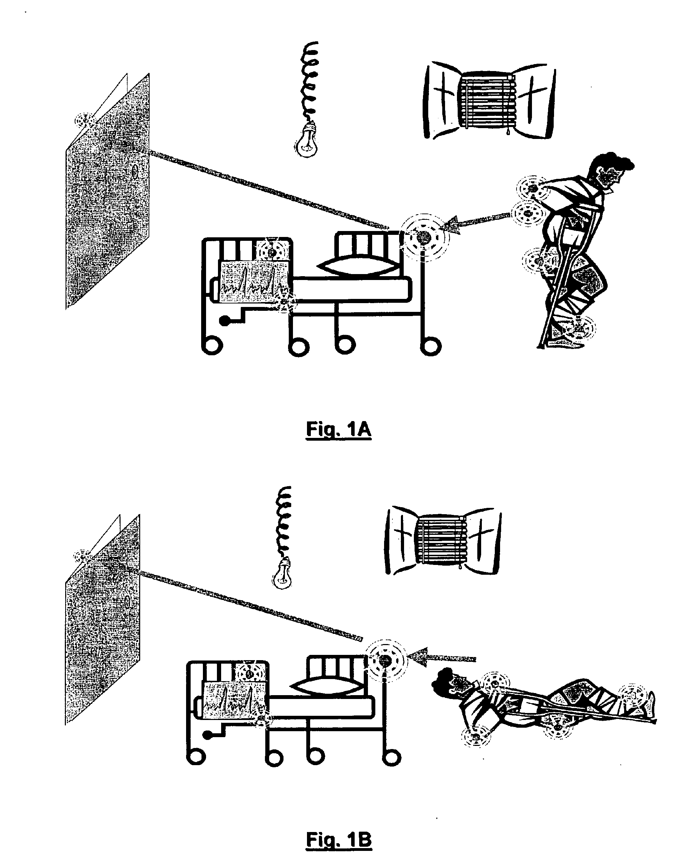

A first embodiment of the invention relates to a sample scenario where dynamic switching between reactive and proactive group header selection is useful. The embodiment relates to a healthcare scenario with a normal body monitoring state and a health alert state. Figures 1A and 1B schematically illustrate this embodiment. In Fig. 1A a patient is shown whose body as well as whose bed is equipped with several sensors. Several monitoring sensors are combined to a group and act as distributed storage units. One of these sensors is selected as group header to send the requested data to a monitoring center. This may e.g. be the node shown at the bed to which an arrow points.

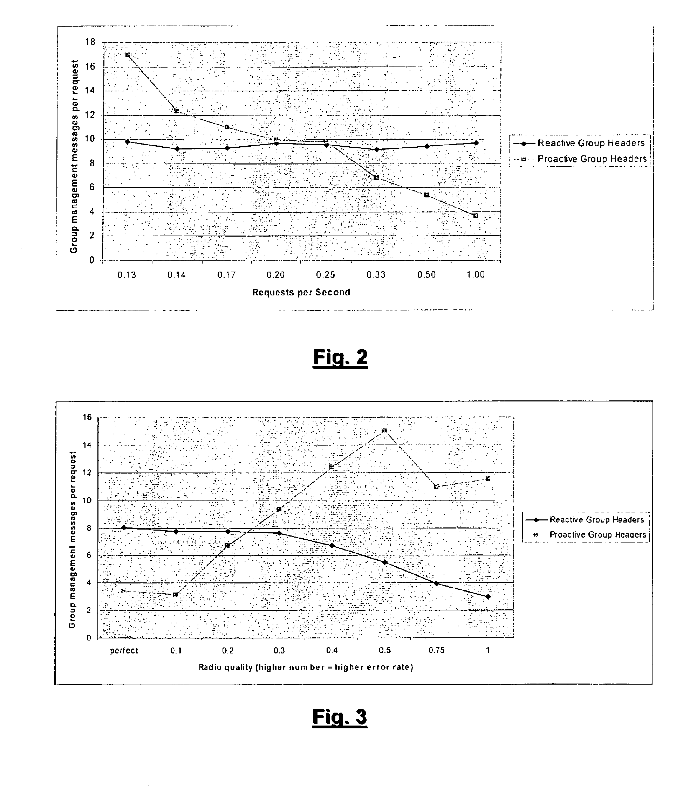

In the normal body monitoring the network is optimized for minimal power consumption with low request rates for the monitoring data. In case of the health alert mode, the body monitoring data has to be updated at a very high rate in order to make sure that the condition of the patient is closely monitored and a quick reaction is possible. In Figure 2 there is shown the result of a simulation which calculates the number goup management messages (the "signalling overhead") depending on the request rate, i.e. the rate with which the sensors transmit their measured data to the group header. The result shown in Figure 2 shows that the reactive group header selection approach is most appropriate for low request rates like in the body monitoring state, and the proactive group header selection approach is most appropriate for high request rates like in the health alert state. Because of this, dynamic switching between the reactive and proactive group header selection approaches (or algorithms) is beneficial for optimizing network behavior and network efficiency.

The switching may be carried out such that the selection approach is chosen which at a given request rate results in the lower signaling overhead. In the example of Fig. 2 this would mean that at a request rate lying below the value where the two graphs are crossing each other a reactive approach is chosen, and if the request rate exceeds this value the proactive selection approach is chosen.

A further embodiment relates to the case of environment monitoring. E.g., in the case of field irrigation, lots of sensor nodes are distributed in the field to monitor the damp of the field. They share the measurements among each other. One of them will respondd to the inquiry of the irrigation control. If The weathree is good, the radio quality for communication among the sensors is good. When it is raining, the radio quality is decreasing. In case of bad radio quality, the reactive algorithm is better than the proactive algorithm, as can be seen from Fig. 3 which shows the dependency of the signalling overhead on the radio quality in case of the two group header selection aproaches. In this example, similarly to the previous embodiment it is preferable to switch between different group header selection algorithms to optimize network behavior. Parameters other than the weather may also affect the radio quality, such as obstacles, interference, etceteras.

For example the amount of signaling overhead may change with the variation of the following parameters:

1. Frequency of the gateway request
2. Radio link quality
3. Mobility, quasi mobility (sleep mode, switch on and off)

Using a temporary selected group header based on the most appropriate group header selection algorithm can help to decrease the communication cost between the sensor nodes and the gateway. The costs in terms of signalling overhead can be calculated depending also on such parameters like the mobility of whole network and based on such a calculation the following result was obtained. A reactively elected group header is the better solution in a disturbed and dynamic environment, whereas proactively elected group headers are more appropriate in a non-disturbed, static environment.

In other words, if the nodes are moving actively and frequently, and if the topology of the network changes often (which relates to both the mobility of the network and also the switching on and off of a node), this may be regarded as a "dynamic" environment. In case of individual nodes often entering or leaving the network or fall into a "sleep mode" or are getting back from sleep mode to normal mode, or in case of bad radio quality in the network, this may be regarded as a "disturbed" environment. In such cases of a disturbed and/or dynamic environment the calculations show that a reactive group header selection approach is more appropriate. However, in case of a less dynamic or less disturbed environment a proactive group header selection algorithm is more appropriate.

For the evaluations leading to the aforementioned results the following assumptions were used:

- The request rate of the Gateway is low compared to the measurement interval of the sensors.
- The costs (regarding power consumption and transmission time) from Gateway to a node are much higher than costs for communication between nodes.
- The nodes are dynamic (regarding location and status), the probability of topology changes between two Gateway requests is high.
- All sensors have equal computing (and battery) power.

In the following there will be described an example of a calculation for obtaining the threshold value based on which it is decided whether to switch to a different group header selection approach or not.

Before starting the calculation, at first the notation used during the calculation will be explained.

$\lambda_{GW}$ - Gateway request rate

$\lambda_{Change}$ Group header changing rate

$N$ - Number of nodes in the group

$\lambda_{PROACTIVE\_HEADER}$ Total rate of messages using proactive group header election

$\lambda_{REACTIVE\_HEADER}$ Total rate of messages using reactive group header election

*Proactive Group Header*

When applying a proactive header selection approach, packets are sent at gateway request time and when the group header has changed. The group header is changing at a rate of $\lambda_{Change}$, where changing can occur because of following reasons and is assumed to stay approximately fixed over time:

- nodes can not be reached because of poor network connection
- nodes are switched on and off
- nodes are moved
- nodes change their status

The $\lambda_{Change}$ is an average group header change rate per node, and it may be based on an assumption about the behaviour of the network if no more concrete measurements are available.

The arrival rates are summed up and then multiplied with the total number of sensors $N$ which results in an arrival rate of:

$$\lambda_{PROACTIVE\ HEADER} = 2 \cdot \lambda_{GW} + \lambda_{Change} \cdot N$$

*Reactive group header*

In the scenario of reactive group headers packets are sent during gateway request phase. During gateway request phase the temporary header is determined. The final arrival rate is:

$$\lambda_{REACTIVE\_HEADER} = \lambda_{GW} \cdot (2 + N)$$

Now the threshold when to switch between a practive and a reactive approach can be calculated. The threshold when to switch between the two election modes can be calculated by setting $\lambda_{PROACTIVE\_HEADER} = \lambda_{REACTIVE\_HEADER}$ assuming an approximately fixed $\lambda_{Change}$.

This results in a threshold of $\lambda_{GW} = \lambda_{Change}$

Now there will be described an embodiment where the thus obtained formula is applied to a certain concrete scenario, in the present embodiment to a health care scenario.

Normally the body functions of a patient are monitored at a low, long-time monitoring rate of $\lambda_{GW}$ = 0.2/*min*. When the measurements show that there is an emergency state, the monitoring rate is increased to $\lambda_{GW}$ = 10/*min*.

The value of 2/h in this example is the assumed value for $\lambda_{Change}$ as the average group header change rate per node. The network consists of $N$ =10 sensors and therefore change rate for the proactive group header for the whole network is 0.33/min.

Since the switching threshold is given by the condition $\lambda_{GW} = \lambda_{Change}$ as shown above, for this scenario the threshold for the switching is:

$$\lambda_{GW} = \lambda_{Change} = 0.33/\min$$

Thus, for normal monitoring, the reactive algorithm is selected and for the emergency state the proactive algorithm is selected.

This results for normal monitoring in a $\lambda_{REACTIVE\_HEADER}$ = 2.4/min (using proactive group header election would have resulted in $\lambda_{PROACTIVE\_HEADER}$ = 3.7/min ).

The result for the emergency state is $\lambda_{PROACTIVE\_HEADER}$ = 23.3/min (using reactive group header election would have resulted in $\lambda_{REACTIVE\_HEADER}$ = 120/min).

The foregoing example shows that an a priori calculation in a design phase of a network can be made to obtain a thershold value based on which it is decided which approach for the group header is to be followed based on the context parameter value. In this example the only affecting context parameter which affects the decision is the gateway request rate, and depending on whether this value (which may also be referred to as switching indication parameter) is above or below a threshold either the proactive or the reactive approach may be followed, and if the parameter crosses the threshold a switching may beperformed.

While in the foregoing example effectively only one affecting parameter (the gateway request rate) influences the decision, it is possible that more than one parameter may be used as decision parameters affecting the switching decision. In this context reference is again made to the parameters request rate and radio quality which have already been mentioned in connection with Figures 2 and 3.

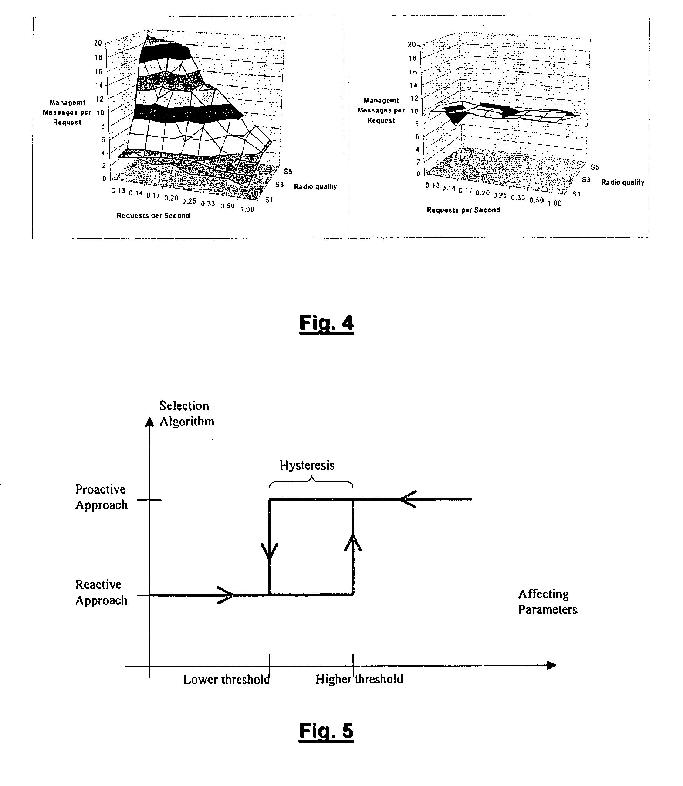

Figure 2 and Figure 3, as already mentioned before, show the influence of the individual parameters request rate and radio quality on the signalling overhead in the network. The combination of these two parameters leads to a three dimensional solution space allowing selecting the most appropriate group header election algorithm for each specific pair of parameters. In Figure 4, for example, the frequency of gateway requests is used as x coordinate and the quality of radio signals as the z coordinate. The y coordinate is the amount of signaling overhead. On the lefthand side of Fig. 4 there is shown the result for the proactive group header selection approach, and on the righthand side there is shown the result for the reactive group header selection approach.

In the reactive case, the number of management messages per request is not significantly related to the frequency of the request and the radio quality. However, in the proactive case, radio quality and request rate are significantly influencing the power consumption. If the radio quality is going down, some nodes can't receive messages from the group header anymore and start a new header selection in their area. This is leading to an increased amount of messages and therewith to increased power consumption. When request rate is going up, the number of messages per unit of time needed to maintain the proactive group header is staying the same but the number of messages per request is going down. Therefore in the 3D case, one can find a boundary where the surface of proactive approach and the surface of reactive approach cross each other. Within the area bounded by that curve, the reactive approach has less management messages per request compared to the proactive approach. This gives a two dimensional threshold decided by both request rate and radio quality, and based on this threshold the most appropriate selection approach may be chosen for a given condition.

In the following there will now be described an embodiment which relates to the actual switching between the two group header selection approaches. According to this embodiment the switching between group header selection algorithms is seamless. That is because the network always uses the group header selected by the old algorithm before a new group header is selected out with the new algorithm. The only cost of the switching is some latency and signaling overhead to notify the related nodes of a switching.

Because of the seamlessness of the switching, the switching latency is not so important for the performance of the networks. However, the switching latency may influence the decision of whether to switch or not. It makes no sense to switch at the moment when the switching threshold is no longer exceeded because during the switching latency the conditions have changed. The signaling overhead for the switching is comparable to the signaling amount of one group header selection process. This is acceptable for cases in which switching happens not so frequently. Considering the above two effects, several rules or requirements can be defined for switching as shown in the following:

1. Switching overdue (because of the latency, at the time of switching, the switching condition is not fulfilled any more) should be prevented.
2. Frequently switching (e.g., because of the frequent or big variation of the affecting parameters; because of jitter effect) should be avoided.

There are several approaches how to implement switching methods for switching between modes which fulfill the above requirements.

According to oneembodiment, one possibility is to use a hysteresis switch as shown in Figure 5. When switching from the reactive approach to the proactive approach, the higher threshold is used, when switching back the lower threshold is used. When the value of affecting parameter falls into the Hysteresis area, no switch is performed. This type of switch can also help to avoid the jitter effect and to reduce the frequency of switching. The size of the hysteresis area can be adjusted according to the variation of the parameters and different application requirements. It can be used for different parameters independently, and the hysteresis area may be chosen for each affecting parameter separately.

According to a further embodiment additional mechanisms can be used to improve this mechanism. For example, using an average value of one parameter averaged over some time as the trigger can neglect some sudden peak of the parameter. This symmetric method is suitable for switching between two equivalent algorithms.

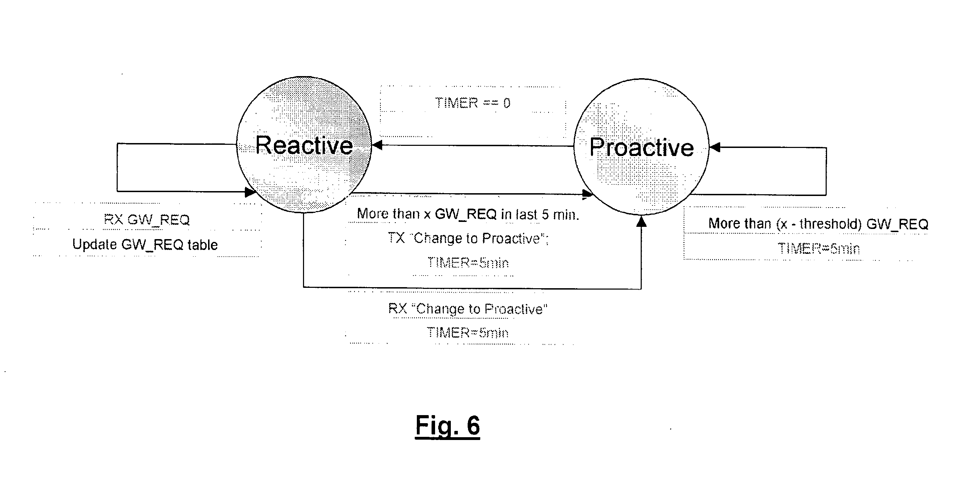

According to a further embodiment one possibility is to use a time out mechanism to trigger the switching, e.g., to switch only if the parameter is above the threshold for a certain period of time, e.g. 5 minutes, as shown in Figure 6. Similarly, switching back may also be performed only if the threshold is not satisfied for some (predetermined period of) time. As can be seen from Fig. 6 the conditions for switching forth and back are different. A switching from reactive to proactive is performed if the request rate remains above a value x for more than 5 minutes. If this is the case, a switching is performed. This means that a message is sent out to all nodes in the group to inform them that they now should switch to the proactive approach. This is indicated in Fig. 6 by the arrow labeled "RX Change to Proactive". A node which is not itself making the decision to switch receives such a message through the network once the decision has been made (by some deciding authority like the group header) that a switch should be made. Moreover, a timer is set to 5 minutes, and this timer will give the timeout criterion for deciding whether to switch back to the reactive mode. The timer starts to count down to zero if the gateway request rate goes down below a value which is smaller than (x-threshold). If the gateway request rate still is below this value when the timer has counted down to zero, a switch to the reactive mode is performed. However, if before the timer has reached zero the vaulueof the gate request rate goes up again beyond (x-threshold), no switching is performed. In this case the timer is reset again, and the countdown starts again only if the value once again falls below (x-threshold). With such a switching mechanism a bias towards the proactive mode can be implemented because the criterion for switching back to the reactive mode in terms of the threshold value is different from the switching forth from reactive to proactive mode. Moreover it would be possible to apply a different timeout value for the two different switching directions.

If the switching from the proactive to the reactive mode is performed, the timer again is set to zero, and the procedure starts again. The gateway request rate is obtained repeatedly, and according to the gateway request rate the gateway request table GW_REQ is updated. If the gateway request rate as indicated in the gateway request table remains above value x for more than 5 minutes, again a switching to the proactive mode is carried out.

As mentioned, one can recognize from this exmple as illustrated in Fig. 6 an assymetric switching method. The thresholds for switching forth and back are different, thereby implementing a kind of hysteresis. According to a variation it could also be possible not only to have different thresholds for the different directions, but also different values set in the timer used for the switching forth and back.

The two time periods chosen for the time out criterion may be chosen differently for the two different switching directions (back and forth). This asymmetric method is especially suitable for switching between a main, dominate algorithm and a secondary algorithm. The time out interval can be set according to different application requirements and variations of the affecting parameters.

According to further embodiments there may also be other criteria for switching. The method of switching and also the detailed parameters for the switching algorithm can be affected by different application requirements, such as the time criteria (allowed latency, fault tolerance...).

As mentioned already, the switching to and back between the two group header selection approaches does not need to be symmetric. This does not only relate to the affecting parameters (hysteresis, different time out values) but also to the actual switching process itself. E.g., the switch from the proactive approach to the reactive approach may be "cheaper" than the other way round, because the latter one needs to go through the process of selecting a group header. This is because of the already mentioned seamless switching the goup header for the proactive approach should already be selected before the actual switching takes place to make sure that the switching is carried out in a seamless manner. This means that the switching from the proactive to the reactive approach and vice versa have different latency and signaling overhead. Therefore, different methods and different switching parameters can be used for switching to and switching back from one approach to the other.

In the following now the actual switching process according to an embodiment will be explained in somewhat more detail. According to one embodiment the detailed steps for switching between the proactive group header selection algorithm and the reactive group header selection algorithm may be described as follows, whereas several different phases should be distinguished. This first phase is the in the pre-design phase in which the network and the relevant parameters are designed and fixed:

- Collect application requirements to decide the method used for switching and the type of switching parameters (e.g., using time out, using threshold... )
- Calculate switching-threshold and values of switching parameters
- Decide default algorithm (used when "switching on" the network or after booting)
- Group header is used as decision node

It should be noted here that the group header not necessarily has to act as the decision node (the node which decides whether to switch to a different approach or not). There may also be a different entity (e.g. another dedicated node in the network) which fulfils this task and acts as the deciding authority.

After the design phase the network may start to actually operate, this may be referred to as the "runtime phase". It is here assumed that the group header is the "deciding authority" which takes the decsion about which group header slection approach is to be used. Under this assumption, according to this embodiment the group header during the runtime phase performs the following steps:

1. Boot up with the default algorithm
2. Check the current group header selection algorithm
3. Monitor the related context or parameters and compare to switching criteria (pre calculated)
4. Make the switching decision
5. Switch to the new algorithm and broadcast the switching signalling all over the network
6. Check network integrity with the neighbors, if not switch to default mode

It should be mentioned here that the switching criteria may take the form of a "switching indication parameter" which is a certain parameter calculated based on the "affecting context parameters" which may influence the switching decision (e.g. gatway request rate, radio quality, mobility, etceteras). The calculation is performed according to a predefined algorithm which was chosen in the pre-design phase. The reulting switching indication parameter is then compared with a certain threshold value which also has been obtained during the pre-design phase, e.g. based on some simulation calculations. If the switching indication parameter is below the threshold a first group header selection approach is chosen, and if it lies above the threshold the second approach is chosen. This reflects the knowledge about the most appropriate group header selection aproach which has e.g. been obtained by some simulation calculation duringthe design phase of the network. Alternatively or additionally this knowledge and its representation by the switching indication parameter and how it is calculated may be improved or enganced by actual measurements in the network during operation. E.g. the signalling overhead or the power comsumption may be measured based on affecting context parameters which are used to calculate the switching indication parameter, and this may turn out that the threshold based on which the decision is made should be chosen somewhat differently from how it was calculated during the design phase.

It should be mentioned here furthermore that the "switching indication parameter" may also be a vector which e.g. consists of context parameters which affect the switching decision. The decision may then be made by comparing the components of the vector with the values in a lookup table representing the a priori knowledge (or the "enhanced experimental knowledge" resulting from measurements like the ones mentioned before) about the network and when a switching should be made.

As has been mentioned already, according to this embodiment the switching decision is made by the group header. In addition to a group header the group also comprises "normal nodes" or "normal group members" which are in contact with the group header. These normal nodes in order to take part in the overall proces according to one embodiment perform the following steps:

1. Boot up with the default group header selection algorithm
2. Listen to group header
3. Switch to a different group header selection algorithm when receiving the switching command
4. Check network integrity with the neighbors, if not switch to default mode

In the foregoing embodiments the switching has been performed based on a plurality of context parameters which may assume a plurality of different values. This may be referred to as "soft switching" in the sense that the affecting parameters are "soft" because they may assume values which may cover a wide range.

However, there may also be embodiments where there is a "hard switching condition" which means that there is a kind of "mode switch" whereas in a first mode the first approach is taken and in a second mode a second approach is taken. In such a hard switch case, the switching between algorithms may be trigged by a mode switch like in the health care scenario where the slection approach depends on whether the patient is in the "normal mode" or in the "alert mode". Such a mode switching can be e.g.carried out by an external trigger, like a physician determining that the parient is now in an alert mode. However, the mode may also be determined based on the sensors and the values measured by them. E.g. a sensor which measures altitude and which is fixed to a patient may notice when the patient falls down and may then trigger the alert mode. Also, more complex assessments can be made, e.g. by taking into accout body parameters like pulse frequency, blood pressure, or the like, based on which then the "mode switch" may be triggered.

Such a "mode switching" may be integrated with the "soft switching" described before. For that purpose it must be determined in which conditions the "mode switching" should overrule the "soft switching" or vice versa.

The switching from one aopproach to the other can also be triggered for the nodes individually by the network mode switching.

According to a further embodiment, there may also be some other hard decision criteria triggering the switch between group header selection algorithms (similar to the "alert mode" in case of a patient in a hospital). E.g., if the application needs to get a fast response from the wireless sensor networks, the proactive approach should be used no matter whether it will result in higher signaling overhead in some situations.

According to a further embodiment the mechanism may be adapted to the fact that the affecting parameters are changing relatively fast. In case of a fast changing environment, the mechanism described in connection with the foregoing embodiments may be applied as well if of some prediction mechanisms are applied. Such mechanisms are able to forecast with a certain probability a value of an affecting parameter based on its past behaviour. Using such a prediction algorithm may then enable the system to react on a situation which actually has not yet become reality yet, and this encreases the system's capability to cope with a changing environment despite the latency of the system. By applying some prediction algorithm it can be avoided that a switch is performed despite actually the future behaviour of the affecting parameters as derived from the prediction shows that actually the change in parameters is only a "spike". By using some prediction algorithm it therefore is possible to reduce the effect of spurious or erratic changes in the affecting parameters. Examples of such prediction algorithms are the Yule-Walker, the Burg and the Levinson algorithms, or hidden markov models. Any algorithm suitable for time series prediction may be used in this context. The prediction algorithms may predict erratic behaviour and thereby may avoid a switching which should better not be performed.

The values of affecting switching parameters (such as the length of time out, the size of hysteresis area...) may be calculated statically in the pre-design phase. However, according to one embodiment these values may also be calculated during run time according to different network environments. The dynamic adaptation of switching parameters can make the switching more efficient.

As mentioned already, the current group headermay be used as the decision point or deciding authority which decides on the switching. However, according to one embodiment It is also possible to use some special selection algorithm to choose an optimal decision point (e.g., a node with more computing power, or with wired connection to the power source, a node which may be in the best location, etcetera). However, such an additional selection algorithm for selecting the decision point in turn results in additional signaling overhead.

It will be understood by the skilled person that the embodiments described hereinbefore may be implemented by hardware, by software, or by a combination of software and hardware. The mobile nodes, the group headers, the gateways, and all other elements described in connection with the embodiments of the invention may be implemented by suitably selecting and programming hardware components such that they operate as described hereinbefore. In particular embodiments of the invention may be implemented by a method for performing a switching between the reactive and proactive approaches hereinbefore but also by any apparatus for performing a switching as described hereinbefore. Such an apparatus may be a node of the network (such as a mobile phone, a smartphone, a PDA, or any device which may connect to a mobile network), an gateway of the network, any other network element, such as e.g. a deciding authority for deciding about a new group header as described hereinbefore, or any mobile network either as a whole or in part. Any skilled person

will recognize that such an apparatus can be implemented by making use of any programmable apparatus such as a microprocessor, a signal processor, or the like, e.g. a standard standalone computer, said apparatus being suitably programmed such that it is able to perform the operations as described hereinbefore. An embodiment of the invention may further be implemented by a computer program, either recorded on a data carrier, stored in a memory or embodied by or transmitted by a communications link, said computer program being able to when being run on a computer cause the computer to carry out a method according to an embodiment of the invention.

**Claims**

1. A method for selecting a group header in a wireless network, whereas said method comprises:

   - a proactive selection approach for selecting the group header, whereas in the proactive selection approach it is repeatedly evaluated based on a predetermined timing scheme and one or more group header selection criteria whether to carry out a new group header selection or whether to continue to use the currently used group header;
   - a reactive approach for selecting the group header, whereas in the reactive approach a group header selection is performed only in response to a service request from an external source triggering said group header selection; wherein said method is further **characterised by**
   - monitoring and evaluating one or more context parameters and determining based thereupon a switching indication parameter:
   - comparing said switching indication parameter with a threshold value:
   - depending on said comparison result, switching between said proactive selection approach and said reactive selection approach in both directions based on said one or more context parameters which have been evaluated to determine said switching indication parameter to assess based on said comparison of said switching indication parameter with said threshold whether the proactive approach or the reactive approach is more appropriate at a given condition which is represented by said one or more context parameters.

2. The method of one of claims 1, wherein said context parameters comprise one or more of the following:

   - the frequency of a request which requests said group header to act;
   - a radio link quality;
   - a parameter indicating mobility or quasi-mobility.

3. The method according to claim 1 or 2, wherein in case of low gateway request rates a reactive approach is selected, and in case of high gateway request rates a proactive approach is selected.

4. The method according to one of claims 1 to 3, wherein

   - if said context parameters indicate a disturbed or dynamic environment a reactive group header selection approach is chosen, and if said context parameters indicate a non-disturbed or static environment said proactive group header selection approach is chosen.

5. The method of one of claims 1 to 4, wherein said method comprises:

- choosing said group header selection approach such that the number of group management messages necessary to operate the wireless network is minimised.

6.  The method of one of claims 1 to 5, further comprising: performing said switching in a seamless manner by continuing to use the group header used before the switching has been completed.

7.  The method of one of claims 1 to 6, further comprising:

    - calculating a switching indication parameter based on said context parameters, and
    - comparing said switching indication parameter with a certain threshold to determine whether a switch from one group header selection approach to the other group header selection approach should be performed, whereas
    - different thresholds are applied when determining whether to switch from a first group header selection approach to a second group header selection approach and whether to switch from a second group header selection approach to a first group header selection approach.

8.  The method of one of claims 1 to 7 , further comprising: applying a timeout such that said switching is only performed if a switch indication parameter is beyond a threshold for a certain period of time

9.  The method of one of claims 1 to 8, said method further comprising:

    determining based on one or more context parameters one or more of the following:

    a threshold which is applied to determine whether to switch between said two group header selection approaches;
    selecting the method for switching between said two group header selection approaches among a plurality of switching methods;
    selecting the parameters of the switching method used for switching between said two group header selection approaches.

10. The method of one of claims 1 to 9, said method further comprising:

    providing a default group header selection approach, whereas said default approach is used
    if an integrity check after said switching indicates a failure, or
    if two groups merge into a single group.

11. An apparatus for selecting a group header in a wireless network, whereas said apparatus comprises:

    - a proactive selection means for selecting the group header, whereas the proactive selection means repeatedly selects said group header based on a predetermined timing scheme;
    - a reactive selection means for selecting the group header, whereas the reactive selection means selects said group header only in response to a service request from an external source triggering said group header selection; wherein said apparatus is further **characterised by**
    - monitoring means for monitoring and evaluating one or more context parameters and determining based thereupon a switching indication parameter:
    - comparing means for comparing said switching indication parameter with a threshold value;
    - depending on said comparison result, switching means for switching between said proactive selection means and said reactive selection means in both directions based on said one or more context parameters which have been are evaluated to determine said switching indication parameter to assess based on said comparison of said switching indication parameter with said threshold whether the proactive approach or the reactive approach is more appropriate at a given condition which is represented by said one or more context parameters.

12. The apparatus according to claim 11 , further comprising:

    means for carrying out a method according to one of claims 2 to 10.

13. A method for determining a threshold to switch between a proactive group header selection approach and a reactive group header selection approach for selecting a group header using a method according to one of claims 1 to 10, said method comprising:

based on one or more affecting parameters which may affect the decision which group header selection approach should be chosen, calculating the signalling overhead in case of said proactive selection approach and in case of said reactive selection approach depending on said parameters, and determining a threshold value for said one or more parameters at which a switching between said proactive and said reactive selection approach should be performed if said signalling overhead should be minimised.

14. The method of claim 13, wherein said calculation is performed in a design phase of the network to obtain a priori knowledge about when to switch between the two different approaches.

15. The method of claim 13 or 14, wherein said threshold calculation is also repeatedly updated during runtime of said network based on one or more dynamically changing parameters of said network.

**Patentansprüche**

1. Verfahren zum Auswählen eines Gruppenanfangsblocks in einem drahtlosen Netz, wobei das Verfahren umfasst:

- einen proaktiven Ansatz zum Auswählen des Gruppenanfangsblocks, wobei in dem proaktiven Ansatz auf der Grundlage eines vorgegebenen Zeitablaufschemas und eines oder mehrerer Gruppenanfangsblock-Auswahlkriterien wiederholt bewertet wird, ob eine neue Gruppenanfangsblock-Auswahl ausgeführt werden soll oder ob weiterhin der momentan verwendete Gruppenanfangsblock verwendet werden soll;
- einen reaktiven Ansatz zum Auswählen des Gruppenanfangsblocks, wobei in dem reakiven Ansatz eine Gruppenanfangsblock-Auswahl nur in Reaktion auf eine Dienstanforderung von einer externen Quelle ausgeführt wird, die die Gruppenanfangsblock-Auswahl auslöst; wobei das Verfahren ferner **gekennzeichnet ist durch**:
- Überwachen und Bewerten eines oder mehrerer Kontextparameter und auf dieser Grundlage Bestimmen eines Umschaltangabeparameters;
- Vergleichen des Umschaltangabeparameters mit einem Schwellenwert;
- in Abhängigkeit von dem Vergleichsergebnis Umschalten zwischen dem proaktiven Ansatz und dem reaktiven Ansatz in beiden Richtungen auf der Grundlage eines oder mehrerer Kontextparameter, die bewertet worden sind, um den Umschaltangabeparameter zu bestimmen, um auf der Grundlage des Vergleichs des Umschaltangabeparameters mit dem Schwellenwert einzuschätzen, ob der proaktive Ansatz oder der reaktive Ansatz unter einer gegebenen Bedingung, die **durch** den einen oder die mehreren Kontextparameter repräsentiert wird, besser geeignet ist.

2. Verfahren nach Anspruch 1, bei dem die Kontextparameter einen oder mehrere der folgenden Parameter umfassen:

- die Häufigkeit einer Anforderung, die eine Aktion des Gruppenanfangsblocks anfordert;
- eine Funkverbindungsqualität;
- einen Parameter, der die Mobilität oder Quasimobilität angibt.

3. Verfahren nach Anspruch 1 oder 2, bei dem im Fall niedriger Gateway-Anforderungsraten ein reaktiver Ansatz ausgewählt wird und im Fall hoher Gateway-Anforderungsraten ein proaktiver Ansatz ausgewählt wird.

4. Verfahren nach einem der Ansprüche 1 bis 3, bei dem

- dann, wenn die Kontextparameter eine gestörte oder dynamische Umgebung angeben, ein reaktiver Gruppenanfangsblock-Auswahlansatz gewählt wird und dann, wenn die Kontextparameter eine nicht gestörte oder statische Umgebung angeben, der proaktive Gruppenanfangsblock-Auswahlansatz gewählt wird.

5. Verfahren nach einem der Ansprüche 1 bis 4, wobei das Verfahren umfasst:

- Auswählen des Gruppenanfangsblock-Auswahlansatz, derart, dass die Anzahl von Gruppenmanagement-Nachrichten, die zum Betreiben des drahtlosen Netzes notwendig sind, minimal ist.

**6.** Verfahren nach einem der Ansprüche 1 bis 5, das ferner umfasst:

Ausführen des Umschaltens auf nahtlose Weise durch fortgesetztes Verwenden des Gruppenanfangsblocks, der verwendet wird, bevor das Umschalten abgeschlossen worden ist.

**7.** Verfahren nach einem der Ansprüche 1 bis 6, das ferner umfasst:

- Berechnen eines Umschaltangabeparameters auf Grund der Kontextparameter und
- Vergleichen des Umschaltangabeparameters mit einem bestimmten Schwellenwert, um zu bestimmen, ob ein Umschalten von einem Gruppenanfangsblock-Auswahlansatz zu dem anderen Gruppenanfangsblock-Auswahlansatz vorgenommen werden soll, wobei
- unterschiedliche Schwellenwerte angewendet werden, wenn bestimmt wird, ob von einem ersten Gruppenanfangsblock-Auswahlansatz zu einem zweiten Gruppenanfangsblock-Auswahlansatz umgeschaltet werden soll und ob von einem zweiten Gruppenanfangsblock-Auswahlansatz zu einem ersten Gruppenanfangsblock-Auswahlansatz umgeschaltet werden soll.

**8.** Verfahren nach einem der Ansprüche 1 bis 7, das ferner umfasst:

Anwenden einer Zeitüberschreitung, derart, dass das Umschalten nur ausgeführt wird, wenn ein Umschaltangabeparameter für eine bestimmte Zeitdauer oberhalb eines Schwellenwertes liegt.

**9.** Verfahren nach einem der Ansprüche 1 bis 8, wobei das Verfahren ferner umfasst:

auf der Grundlage eines oder mehrerer Kontextparameter Bestimmen eines oder mehrerer der folgenden Elemente:

einen Schwellenwert, der angewendet wird, um zu bestimmen, ob zwischen zwei Gruppenanfangsblock-Auswahlansätzen umgeschaltet werden soll;
Auswählen des Verfahrens zum Umschalten zwischen den zwei Gruppenanfangsblock-Auswahlansätzen unter mehreren Umschaltverfahren; und
Auswählen der Parameter des Umschaltverfahrens, das zum Umschalten zwischen den zwei Gruppenanfangsblock-Auswahlansätzen verwendet wird.

**10.** Verfahren nach einem der Ansprüche 1 bis 9, wobei das Verfahren ferner umfasst:

Vorsehen eines voreingestellten Gruppenanfangsblock-Auswahlansatzes, wobei der voreingestellte Ansatz verwendet wird,
falls eine Integritätsprüfung nach dem Umschalten einen Fehler angibt oder
falls sich zwei Gruppen zu einer einzigen Gruppe vereinigen.

**11.** Vorrichtung zum Auswählen eines Gruppenanfangsblocks in einem drahtlosen Netz, wobei die Vorrichtung umfasst:

- eine proaktive Auswahleinrichtung zum Auswählen des Gruppenanfangsblocks, wobei die proaktive Auswahleinrichtung den Gruppenanfangsblock auf der Grundlage eines vorgegebenen Zeitablaufschemas wiederholt auswählt;
- eine reaktive Auswahleinrichtung zum Auswählen des Gruppenanfangsblocks, wobei die reaktive Auswahleinrichtung den Gruppenanfangsblock nur in Reaktion auf eine Dienstanforderung von einer externen Quelle auswählt, die die Gruppenanfangsblockauswahl auslöst; wobei die Vorrichtung ferner **gekennzeichnet ist durch**:
- eine Überwachungseinrichtung zum Überwachen und Bewerten eines oder mehrerer Kontextparameter und auf dieser Grundlage zum Bestimmen eines Umschaltangabeparameters;
- eine Vergleichseinrichtung zum Vergleichen des Umschaltangabeparameters mit einem Schwellenwert;
- eine Umschalteinrichtung, die in Abhängigkeit von dem Vergleichsergebnis zwischen der proaktiven Auswahleinrichtung und der reaktiven Auswahleinrichtung in beiden Richtungen auf der Grundlage des einen oder der mehreren Kontextparameter, die bewertet worden sind, umschaltet, um den Umschaltangabeparameter zu bestimmen, um auf der Grundlage des Vergleichs des Umschaltangabeparameters mit dem Schwellenwert einzuschätzen, ob der proaktive Ansatz oder der reaktive Ansatz unter einer gegebenen Bedingung, die **durch** den einen oder die mehreren Kontextparameter repräsentiert wird, besser geeignet ist.

**12.** Vorrichtung nach Anspruch 11, die ferner umfasst:

eine Einrichtung zum Ausführen eines Verfahrens nach einem der Ansprüche 2 bis 10.

**13.** Verfahren zum Bestimmen eines Schwellenwertes, um zwischen einem proaktiven Gruppenanfangsblock-Auswahlansatz und einem reaktiven Gruppenanfangsblock-Auswahlansatz umzuschalten, um einen Gruppenanfangsblock unter Verwendung eines Verfahrens nach einem der Ansprüche 1 bis 10 auszuwählen, wobei das Verfahren umfasst:

auf der Grundlage eines oder mehrerer Beeinflussungsparameter, die die Entscheidung beeinflussen können, welcher Gruppenanfangsblock-Auswahlansatz gewählt werden sollte, Berechnen des Signalgebungszusatzbedarfs im Fall des proaktiven Auswahlansatzes und im Fall des reaktiven Auswahlansatzes in Abhängigkeit von den Parametern und Bestimmen eines Schwellenwertes für den einen oder die mehreren Parameter, bei dem ein Umschalten zwischen dem proaktiven und dem reaktiven Auswahlansatz ausgeführt werden sollte, falls der Signalgebungszusatzbedarf minimiert werden soll.

**14.** Verfahren nach Anspruch 13, bei dem das Berechnen in einer Entwurfsphase des Netzes ausgeführt wird, um im Voraus Kenntnis darüber zu erlangen, wann zwischen den beiden Ansätzen umgeschaltet werden soll.

**15.** Verfahren nach Anspruch 13 oder 14, bei dem die Schwellenwertberechnung während des Betriebs des Netzes auf der Grundlage eines oder mehrerer dynamisch sich ändernder Parameter des Netzes wiederholt aktualisiert wird.


**Revendications**

**1.** Procédé de choix d'un en-tête de groupe dans un réseau sans fil, attendu que ledit procédé comprend:

une approche de choix proactive pour choisir l'en-tête de groupe, ladite approche de choix proactif étant évaluée de manière répétée sur la base d'un programme de minutage prédéterminé et un ou plusieurs critère(s) de choix d'en-tête de groupe soit pour effectuer un choix de nouvel en-tête de groupe soit pour continuer à utiliser l'en-tête de groupe utilisé actuellement ;
une approche réactive pour choisir l'en-tête de groupe, ladite approche réactive du choix d'en-tête de groupe étant effectuée seulement en réponse à une demande de service venant d'une source externe déclenchant ledit choix d'en-tête de groupe ; ledit procédé étant en outre **caractérisés par** les étapes suivantes :

contrôler l'évaluation d'un ou plusieurs paramètre(s) contextuel(s) et déterminer un paramètre d'indication de commutation sur la base desdits paramètres contextuels :

la comparaison dudit paramètre d'indication de commutation avec une valeur seuil :

en fonction dudit résultat comparatif, commuter entre ladite approche de choix proactive et ladite approche de choix réactive dans les deux directions sur la base dudit un ou plusieurs paramètre (s) contextuel(s) qui ont été évalués pour déterminer ledit paramètre d'indication de commutation pour évaluer, en fonction de ladite comparaison dudit paramètre d'indication de commutation avec ledit seuil si l'approche proactive ou l'approche réactive est plus appropriée à une condition donnée qui est représentée par ledit un ou plusieurs paramètre(s) contextuel(s).

**2.** Procédé selon l'une des revendications 1, dans lequel lesdits paramètres contextuels comprennent un ou plusieurs des éléments suivants:

les fréquences d'une demande qui demande à l'en-tête de groupe d'agir ;
une qualité de lien radio ;
un paramètre indiquant la mobilité ou la quasi-mobilité.

**3.** Procédé selon la revendication 1 ou 2, dans lequel en cas de faibles taux de demande de passerelle une approche réactive est choisie, et en cas de taux élevés de demande de passerelle une approche proactive est choisie.

**4.** Procédé selon l'une des revendications 1 à 3, dans lequel
si lesdits paramètres contextuels indiquent un environnement perturbé ou dynamique une approche réactive de choix d'en-tête de groupe est choisie, et si lesdits paramètres contextuels indiquent un environnement non perturbé ou statique ladite approche proactive de choix d'en-tête de groupe est choisie.

5. Procédé selon l'une des revendications 1 à 4, comprenant :

le choix de ladite approche de choix d'en-tête de groupe de manière à ce que le nombre de messages de gestion de groupe nécessaires pour faire fonctionner le réseau sans fil soit minimisé.

6. Procédé selon l'une des revendications 1 à 5, comprenant en outre : l'exécution de ladite commutation d'une manière transparente en continuant à utiliser l'en-tête de groupe utilisé avant que la commutation ait été terminée.

7. Procédé selon l'une des revendications 1 à 6, comprenant en outre :

le calcul d'un paramètre d'indication de commutation basé sur lesdits paramètres contextuels, et
la comparaison dudit paramètre d'indication de commutation avec un certain seuil pour déterminer si une commutation à partir d'une approche de choix d'en-tête de groupe vers l'autre approche de choix d'en-tête de groupe doit être effectuée, attendu que
les différents seuils s'appliquent quand on détermine soit la commutation à partir d'une approche de choix d'un premier en-tête de groupe vers une approche de choix d'un second en-tête de groupe et soit la commutation à partir d'une approche de choix d'un second en-tête de groupe vers une approche de choix d'un premier en-tête de groupe.

8. Procédé selon l'une des revendications 1 à 7, comprenant en outre : application d'une temporisation de telle manière que ladite commutation s'effectue seulement si un paramètre d'indication de commutation se trouve au-delà d'un seuil pendant une certaine période.

9. Procédé selon l'une des revendications 1 à 8, comprenant en outre :

la détermination basée sur un ou plusieurs paramètre(s) contextuel(s) d'un ou plusieurs éléments suivants :

un seuil qui s'applique pour déterminer si on commute entre lesdites deux approches de choix d'en-tête de groupe ;
le choix du procédé de commutation entre lesdites deux approches de choix d'en-tête de groupe parmi une pluralité de procédés de commutation ;
le choix des paramètres du procédé de commutation utilisé pour commuter entre lesdites deux approches de choix d'en-tête de groupe.

10. Procédé selon l'une des revendications 1 à 9, comprenant en outre :

la fourniture d'une approche de choix d'en-tête de groupe par défaut, attendu que ladite approche par défaut est utilisée
si un contrôle d'intégrité après ladite commutation indique une défaillance ou
si deux groupes fusionnent en un seul groupe.

11. Dispositif de choix d'un en-tête de groupe dans un réseau sans fil, comprenant :

des moyens de choix proactif pour choisir l'en-tête de groupe, lesdits moyens de choix proactifs choisissant de manière répétée ledit en-tête de groupe en fonction d'un programme de minutage prédéterminé ;
des moyens de choix réactif pour choisir l'en-tête de groupe, lesdits moyens de choix réactifs choisissant l'en-tête de groupe seulement en réponse à une demande de service venant d'une source externe déclenchant ledit choix d'en-tête de groupe ; ledit dispositif est en outre **caractérisé par** :

des moyens de contrôle pour le contrôle et l'évaluation d'un ou plusieurs paramètre(s) contextuel(s) et la détermination basée sur un paramètre d'indication de commutation ;
des moyens de comparaison pour comparer ledit paramètre d'indication de commutation à une valeur seuil :

des moyens de commutation pour commuter, en fonction dudit résultat comparatif, entre lesdits moyens de choix proactifs et lesdits moyens de choix réactifs dans les deux directions en fonction dudit un ou plusieurs paramètre(s) contextuel(s) qui ont été évalués pour déterminer ledit paramètre d'indication de commutation pour évaluer, basé sur ladite comparaison dudit paramètre d'indication de commutation avec ledit seuil si l'approche proactive ou l'approche réactive est plus appropriée à une condition donnée qui est représentée par ledit un ou plusieurs paramètre(s) contextuel(s).

12. Dispositif selon la revendication 11, comprenant en outre :

des moyens pour mettre en oeuvre un procédé selon l'une des revendications 2 à 10.

13. Procédé de détermination de seuil pour commuter entre une approche proactive de choix d'en-tête de groupe et une approche réactive de choix d'en-tête de groupe pour choisir un en-tête de groupe en utilisant un procédé selon l'une des revendications 1 à 10, ledit procédé comprenant :

basé sur un ou plusieurs paramètre(s) concerné(s) qui peuvent affecter la décision de choix d'approche de choix d'en-tête de groupe qui doit être prise, le calcul de la marge de signalisation dans le cas de ladite approche de choix proactive et dans le cas de ladite approche de choix réactive dépendant desdits paramètres, et la détermination d'une valeur seuil pour ledit un ou plusieurs paramètre(s) vers lesquels une commutation entre lesdites approches de choix proactives et réactives doit être effectuée si ladite marge de signalisation peut être minimisée.

14. Procédé selon la revendication 13, dans lequel ledit calcul est effectué dans une phase de conception du réseau pour obtenir une connaissance à priori sur le moment de la commutation entre les deux différentes approches.

15. Procédé selon la revendication 13 ou 14, dans lequel ledit calcul de seuil est également mis à jour de manière répétée pendant la durée d'exécution dudit réseau basé sur un ou plusieurs paramètre(s) changeant(s) de manière dynamique dudit réseau.

**Fig. 1A**

**Fig. 1B**

**Fig. 2**

**Fig. 3**

**Fig. 4**

**Fig. 5**

TIMER == 0

Reactive          Proactive

RX GW_REQ

Update GW_REQ table

More than x GW_REQ in last 5 min.

TX "Change to Proactive";

TIMER=5min

More than (x - threshold) GW_REQ

TIMER=5min

RX "Change to Proactive"

TIMER=5min

**Fig. 6**

EP 1 742 426 B1

Time needed to aggregate the switch command
all over the network

Proactive
to reactive

Time needed to select a
proactive group header

Reactive
to proactive

Time

## Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030202465 A

**Non-patent literature cited in the description**

- **E. J. COYLE.** An energy efficient hierarchical clustering algorithm for wireless sensor networks. *roceedings of the 22nd Annual Joint Conference of the IEEE Computer and Communications Societies (Infocom 2003,* April 2003
- **KAMIN WHITEHOUSE ; CORY SHARP ; ERIC BREWER ; DAVID CULLER.** In Hood: a neighborhood abstraction for sensor networks. *Proceedings of the 2nd international conference on Mobile systems, applications, and services,* 2004

- In Distributed Clustering for Ad-Hoc Networks. *1999 International Symposium on Parallel Architectures, Algorithms and Networks (ISPAN '99,* 23 June 1999
- **A. CERPA ; D. ESTRIN.** In ASCENT: Adaptive Self-Configuring Sensor Networks Topologies. *INFOCOM 2002. Twenty-First Annual Joint Conference of the IEEE Computer and Communications Societies. Proceedings,* 23 June 2002, vol. 3